# EUROPÄISCHE PATENTANMELDUNG

(11) **EP 1 512 604 A1**
(43) Veröffentlichungstag der Anmeldung: **09.03.2005**
(21) Anmeldenummer: 03020036.4
(22) Anmeldetag: 04.09.2003
(51) Int. Cl.: B62B 3/00, B62B 5/00, A45F 4/02

(54) **Feste Box als Rucksack in Kombination mit zwei Wanderstöcken und zwei Rädern als Sport- und Spass-Fahrzeug**

(71) Anmelder: Arnold, Franz Xaver, 83737 Irschenberg (DE)
(72) Erfinder: Arnold, Franz Xaver, 83737 Irschenberg (DE)

(57) **Zusammenfassung**

Eine als Rucksack ausgebildete, steife Box (1) wird durch die Anbringung von zwei Rädern (4) und Befestigungsmöglichkeit für zwei Wanderstöcke (3), die als Lenkstange dienen, zum Berg-Abfahrts-Vehikel.

Das sportliche Spaß-Fahrzeug entlastet Muskeln und Gelenke des Bergwanderers beim Abstieg.

## Beschreibung

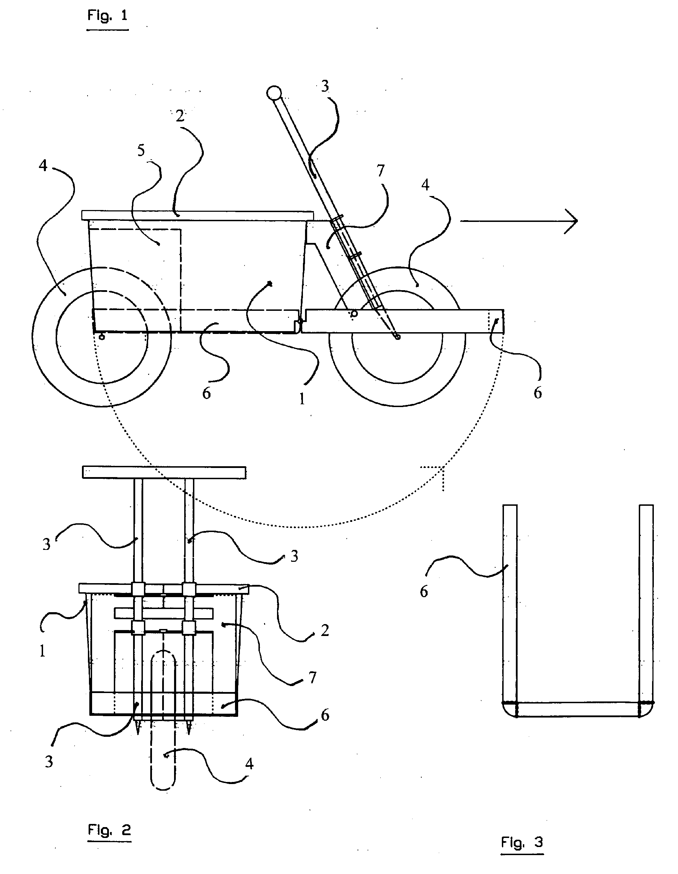

Gegenstand der vorliegenden Erfindung ist die Kombination einer in den Figuren 1 und 2 gezeichneten, steifen Box (z.B. aus Kunststoff), die als Rucksack beim Bergwandern dient, mit zwei im Handel erhältlichen Teleskop- (zusammenschiebbaren) Wanderstöcken und zwei Rädern.

Die Zeichnungen zeigen, im Abfahrtsstadium - am Boden rollend:
Fig. 1 Seitenansicht, beide Seiten spiegelbildlich gleich; der Pfeil zeigt die Fahrtrichtung.
Fig. 2 Frontansicht.
Fig. 3 Klapprahmen alleine.

Die Box 1 gemäß Fig. 1 und 2, etwa in der Größe eines Rucksackes (hier 500mm Lg./ /365 mm Br./260 mm Hö.), hat einen aufklappbaren Deckel 2 und um den Boden herum einen Rahmen 6 (hier Winkel-Aluminium 50/30/2 mm) gem. Fig. 1, 2 und 3.
Die Fig. 1 und 2 zeigen die Erfindung im fahrbaren Zustand.
Dabei ist der Rahmen 6 in Fahrtrichtung nach vorne geklappt und wird von dem ebenfalls nach vorne ausgeklappten (Drehpunkt knapp unter dem Deckel 2) Rahmen des Lenkmechanismus 7 gestützt.

Im tragbaren Zustand sind die Räder 4 in der Rucksack-Box 1 unter dem Deckel 2 verstaut, der Rahmen 6 ist von vorne nach hinten, unter die Box zurückgeklappt,
die Stütze 7 (hier ebenfalls aus Winkel-Alumium 50/30/2 mm) samt Lenkmechanismus ist an die Box herangeklappt und die beiden Wanderstöcke 3 (samt Quergriff) sind ausgeklinkt.
In den Deckel 2 versenkbare Riemen (nicht abgebildet) ermöglichen das Tragen des "Mountain-gigg" auf dem Rücken.

In Fig. 1 ist der Radkasten 5 als unterbrochene Linie dargestellt.
Er hat mit geräumigen Abständen die Breite und Höhe des in die Box reichenden Rades und dient als Schutz des Box-Innenraumes vor Schmutz sowie, mit einer Polsterung bis zum darüber liegenden Deckel 2, als unmittelbare, statische Abstützung des bei Talfahrt darauf sitzenden Menschen.

### Nutzen der Erfindung

Die Erfindung bezieht sich auf das Problem des muskel- und gelenkzehrenden Abstiegs beim Bergwandern.
Zur Ersteigung eines Berges benützen Menschen meist zwei Stöcke als Aufstiegshilfe und einen Rucksack als Behälter zum Mittragen z.B. von Kleidung und Proviant.
Die Stöcke ("Alpenstocks") und der Rucksack werden durch die Bauart der Erfindung in Kombination als Abfahrts-Vehikel verwendet.

## Patentansprüche

1. Eine feste Box in der Größe etwa eines Rucksackes, welche durch die Anbringung von zwei Rädern und zwei Wanderstöcken als Abfahrts-Vehikel für einen Bergsteiger dient.

2. Der Radkasten für das Hinterrad, welcher in der beschriebenen Bauart als unmittelbare Abstützung des Fahrergewichts dient und damit eine leichtgewichtige Konstruktion erlaubt.

3. Der dargestellte Klappmechanismus von zwei Winkelrahmen, die - eingeklapt - der Box anliegen, und zugleich - ausgeklappt - als Stütze für den Lenkmechanismus und für die Füße dienen.
